# EUROPÄISCHE PATENTSCHRIFT

(11) **EP 2 075 190 B1**
(45) Veröffentlichungstag und Bekanntmachung des Hinweises auf die Patenterteilung: **14.11.2012**
(21) Anmeldenummer: 09003896.9
(22) Anmeldetag: 19.04.2005
(51) Int. Cl.: B63H 9/06

(54) **Positionierungsvorrichtung für ein frei ausfliegendes drachenartiges Windangriffselement bei einem Wasserfahrzeug mit Windantrieb**
Positioning device for a free flying kite-like wind attack element of a water vehicle with wind propulsion
Dispositif de positionnement pour un élément volant librement du type cerf-volant dans un bateau ayant un entraînement éolien

(30) Priorität: 19.04.2004 DE 102004018838
(43) Veröffentlichungstag der Anmeldung: 01.07.2009
(62) Teilanmeldung aus: 05737834.1
(73) Patentinhaber: Skysails GmbH & Co. KG, 21079 Hamburg (DE)
(72) Erfinder: Wrage, Stephan, 22767 Hamburg (DE)
(74) Vertreter: Glawe, Delfs, Moll

(56) Entgegenhaltungen:
- DE-A1- 3 518 131
- GB-A- 2 098 952

## Beschreibung

Die Erfindung betrifft eine Positionierungsvorrichtung für ein frei ausfliegendes drachenartiges Windangriffselement bei einem Wasserfahrzeug mit Windantrieb.

Eine derartige Positionierungsvorrichtung ist aus der US PS 2 433 344 bekannt. Hierbei handelt es sich allerdings nicht um eine Winsch, die geeignet ist, bei einem Wasserfahrzeug mit Windantrieb ein Windangriffselement entsprechend den Windverhältnissen einzustellen, sondern es geht nur darum, ein allgemeines aeronautisches Objekt, in einer konstanten Höhe zu halten. Eine Einstellung entsprechend den Windbedingungen ist bei der bekannten Vorrichtung nicht möglich.

Die DE 3518131, die als nächstliegender Stand der Technik angesehen wird, offenbart ein Drachensegel, das mit Hilfe von im Segel eingebauten Leichgasballons hochgehalten wird.

Der Erfindung liegt die Aufgabe zugrunde, eine Positionierungsvorrichtung der eingangs angegebenen Gattung anzugeben, welche den genannten Nachteil nicht aufweist und es gestattet, die Position des Windangriffselements entsprechend den Windbedingungen selbsttätig anzupassen.

Diese Aufgabe wird mit den im kennzeichnenden Teil des Anspruchs 1 angegebenen Maßnahmen gelöst. Die Erfindung beruht dabei auf der Erkenntnis, dass eine Positionierungsvorrichtung für ein frei ausfliegendes drachenartiges Windangriffselement mit einem Tragflächenprofil als ausschließlicher Antrieb, als Hilfs- oder als Not-Antrieb, das über ein Zugseil mit einem Wasserfahrzeug, insbesondere einem See gehenden Schiff, verbunden ist, dann in günstiger Weise erzielbar ist, wenn sich die Länge des Zugseils jeweils an die atmosphärischen Zustände anpasst. Wenn ein automatisches Holen und Fieren erfolgen soll, so wird die Grenzkraft zum Fieren größer eingestellt als die Grenzkraft zum Holen, so dass ein stabiler Betrieb ohne Regelschwingungen eintritt.

Erfindungsgemäß wird das Einholen und Fieren, insbesondere bei erhöhtem Seegang, in der Weise vorgenommen, dass unerwünschte Schiffsbewegungen (Rollen, Stampfen, Gieren) herabgesetzt werden. Das Einholen und Fieren erfolgt also phasenversetzt zu der Komponente der Schiffsbewegungen in Seilrichtung, so dass insoweit einerseits die Schiffsbewegungen verringert werden, andererseits aber auch für eine stabile Führung des Windangriffselements gesorgt ist, da die auf das Zugseil wirkenden Kräfte verringert werden.

Bei der erfindungsgemässen Lösung ist besonders vorteilhaft, dass gleichzeitig eine Überlastung des Zugseils vermieden wird, da die Lastgrenze, bei der ein Fieren erfolgt, bevorzugt so gewählt wird, dass sie gut innerhalb der Belastungstoleranz des Zugseils gelegen ist.

Weiterhin ist es günstig, wenn weitere Mittel vorgesehen sind, welche ein Holen bzw. Fieren erst dann auslösen, wenn das Unterschreiten bzw. Überschreiten oder der Strömungsabriss für eine vorgegebene Zeitdauer, die gegebenenfalls für jede Funktionsrichtung unterschiedlich festgelegt sein kann, andauert, da auf diese Weise ein zu häufiges Holen und Fieren vermieden wird. Die Zeitdauern liegen dabei bevorzugt im Bereich weniger Sekunden.

Bei einer anderen bevorzugten Ausführung der Erfindung wird das Ausgangssignal eines Sensors für einen bevorstehenden Strömungsabriss einem Wandler zugeführt wird, welcher eine an Bord des Wasserfahrzeugs befindliche Winsch zur Verkürzung des Zugseils in der Weise ansteuert, dass die Anströmung des Windangriffselements soweit vergrößert wird, dass der Auftrieb des Windangriffselements ausreichend ist, um dieses mindestens in der Luft zu halten. Dabei kann die Winschgeschwindigkeit beim Holen auf einen festen Mindestwert gesetzt werden, welcher eine Anströmgeschwindigkeit garantiert, die ausreichend ist, das Windangriffselement stabil zu fliegen. Alternativ kann eine Mindestspannung des Zugseils definiert werden. Sollte diese unterschritten werden, zieht die Winsch an und stellt so die Anströmung am Windangriffselement sicher. Sobald in Folge dessen eine definierte Spannung überschritten wir, stoppt die Winsch wieder und der normale Flugzustand ist hergestellt. Damit erreicht man eine einfache, von zwei Zugkraft-Schwellwerten abhängige Winschsteuerung.

Bei einer weiteren günstigen Ausführung der erfindungsgemäßen Positionierungsvorrichtung wird, wenn die Anströmung oder Zugkraft wieder einen vorgegebenen weiteren Schwellwert überschreitet - der unterhalb desjenigen Wertes liegt, bei dem in jedem Fall gefiert werden muss, die Länge des Zugseils wieder sukzessiv vergrößert wird, bis er im Wesentlichen seine Länge vor der Verkürzung erreicht hat.

Weiterhin kann in bevorzugter Weise vorgesehen sein, dass die Winsch eine vorgegebene Drehmoment-Seillängenkennlinie um die eingestellte Seillänge herum aufweist, welche bewirkt, dass Seilstöße abgefedert werden. Diese Maßnahme zeichnet sich dadurch aus, dass dynamische Belastungen des Windangriffselements und des Zugseils reduziert werden können. Dies kann dann geschehen, wenn die Drehmoment-Seillängenkennlinie ein progressives Moment aufweist, d.h. je mehr Seil ausgefiert wird, desto größer wird der Widerstand der Winsch. Mit einer solchen Kennlinie bewirkt ein am Windangriffselement wirkender Windstoß zunächst eine schnelle Fierung von viel Seil, dann aber ein sanftes Abbremsen des Systems.

Um ein sicheres Bergen des Windangriffselements zu gewährleisten, ist es ferner günstig, wenn die Winschgeschwindigkeit beim Bergen die Mindestanströmgeschwindigkeit des Windangriffselements zur Aufrechterhaltung seiner Flugfähigkeit unter Belastung durch das Zugseil gewährleistet.

Weiterhin sind Mittel vorgesehen, welche auf besondere Kriterien ein selbsttätiges Einholen des Windangriffselement bewirken, wenn die Windgeschwindigkeit geringer ist als zur Aufrechterhaltung seiner Flugfähigkeit unter Belastung durch das Zugseil erforderlich ist oder wenn auf Grund navigatorischer Daten eine Kollision mit einem Gegenstand unter Wasser, im Wasser, an Land oder in der Luft innerhalb eines Zeitraums zu befürchten ist, der kleiner oder gleich der Zeit ist, welche für das Einholen des Windangriffselements bei maximaler Winschgeschwindigkeit mindestens erforderlich ist. Dasselbe gilt, wenn navigatorische Einschränkungen das Führen des Windangriffselements zu verhindern drohen.

Um höhere Windgeschwindigkeiten in größeren Höhen auszunutzen, ist es günstig, wenn, sobald innerhalb eines vorgegebenen Zeitintervalls die Mindestanströmgeschwindigkeit nicht unterschritten wurde oder ein Wettersignal empfangen bzw. ermittelt wird, welches eine erhöhte Windgeschwindigkeit bzw. eine die Fahrt in Kursrichtung begünstigende Windrichtung anzeigt, ein Fieren des Seils jeweils um einen vorbestimmten zusätzlichen Längenbetrag ausgelöst wird und diese Länge beibehalten wird, wenn bei der ausgebrachten zusätzlichen Seillänge der Seilzug nicht abfällt. Auf diese Weise wird das Seil gefiert, wenn konstante Bedingungen herrschen, um zu versuchen, das Windangriffselement in größerer Höhe zu führen.

Es ist ersichtlich, dass - im Gegensatz zum Stand der Technik - eine Vielzahl von Maßnahmen getroffen wird, welche die vollautomatische Führung eines Windangriffselements als Vortriebselement ermöglichen, das in unterschiedlichen Höhen geführt werden muss.

Um den hohen Anforderungen, welche an eine Winsch nach der Erfindung gestellt werden, insbesondere in Bezug auf Energiebedarf, Kraft und Reaktionsfähigkeit, gerecht zu werden, ist es weiterhin günstig, wenn die Winsch mit einem Druckmedium angetrieben wird, wobei der Winschantrieb insbesondere als volumenverstellbare Hydraulikpumpe ausgebildet ist. Dadurch lassen sich auch Sicherheitsforderungen erfüllen, welche - beispielsweise auf Tankschiffen - den Einsatz von Elektroantrieben wegen der bestehenden Brandgefahr beschränken.

Um auch im Notfall ein sicheres Bergen zu gewährleisten, ist zum Betrieb der Winsch ein Notaggregat vorgesehen, welches die zum Betrieb der Winsch erforderliche Energie auch bei Ausfall der primären Energiequelle sicherstellt.

Besonders vorteilhaft bei der Erfindung ist der Umstand, dass die Kräfte zur Veränderung des Windangriffselements lediglich über kurze Wege übertragen werden müssen, so dass präzise Einstellungen ermöglicht sind, zumal bei der Betätigung über lange Zugleinen schon durch deren Dehnungen keine präzise Übermittlung der Steuerbefehle möglich ist. Weiterhin ist das Windangriffselement nicht dadurch Gefahren ausgesetzt, dass sich die Leinen miteinander verschlingen und es manövrierunfähig wird. Man muss sich nämlich vor Augen führen, dass die korrekte Einstellung und Führung des Windangriffselements auch für das Wasserfahrzeug insgesamt von erheblicher Bedeutung ist, da beispielsweise ein Manöver zur Fahrtrichtungsänderung stets eine Neueinstellung des Windangriffselements mit einschließen muss. Wären hier beispielsweise Leinen überkreuzt oder vertakelt, so könnte entweder die Richtungsänderung nicht ausgeführt werden oder das Windangriffselement müsste gekappt werden.

Weiterhin vorteilhaft ist, dass wenn die Betätigungselemente bzw. die Mittel zur Krafterzeugung in unmittelbarer Nähe des Windangriffselements vorgesehen sind, die entsprechenden Regeleinrichtungen auch mindestens teilweise dort unmittelbar beim Windangriffselement vorgesehen sein können, so dass auch auf aufwendige und störanfällige Signalübertragungswege weitgehend verzichtet werden kann.

Bei der Veränderung der aerodynamischen Wirkung des Windangriffselements sind alle aerodynamischen Steuerungen, wie Klappen, Ruder, sowie die Änderung seiner Ausrichtung, Anstellung und/oder Form eingeschlossen.

Die Änderung der Form kann dabei bevorzugt durch eine symmetrische oder unsymmetrische Änderung des Tragflächenprofils über eine Beeinflussung der Ausrichtung seiner Strömungsabrisskante, durch Verwindung des Tragflächenprofils, durch symmetrische und/oder durch unsymmetrische Änderung der Wölbung des Tragflächenprofils und/oder durch Änderung des Angriffspunkts des Zugseils, erfolgen. Bei anderen vorteilhaften Weiterbildungen kann die Veränderung der aerodynamischen Eigenschaften auch über eine Veränderung der Geometrie des Tragflächenprofils vorgenommen werden, wie es sich im Querschnitt des Drachens oder seiner Wölbung manifestiert. Eine derartige Änderung der Form besteht bei einem zweilagigen Tragflächenprofil vorteilhafterweise in einem Verändern des Abstands zwischen den beiden Lagen durch entsprechende Elemente.

Aus Gewichtsgründen kann es günstig sein, dass eine beidseitige und/oder gegensinnige Betätigung zur gleichsinnigen bzw. unsymmetrischen Änderung des Tragflächenprofils durch ein einziges Antriebselement erfolgt. In diesem Fall werden beispielsweise zwei Querruder jeweils gegensinnig betrieben, wobei die neutrale Position die Mittellage beider Ruder bildet.

Bei einem aus textilem Material bestehenden Windangriffselement, wie es beispielsweise ein Drachen nach Art eines Gleitschirms darstellt, kann die Veränderung der aerodynamischen Wirkung vorzugsweise durch Verstellen oder durch Verlängern oder Verkürzen von mindestens einer Steuerleine mittels des Antriebselements erfolgen.

Um die für die aerodynamischen Verstellungen aufzuwendenden Kräfte anzupassen, kann es günstig sein, wenn mindestens eine Steuerleine mindestens eine Umlenkung oder Rückführung in Form eines Flaschenzugs aufweist, wobei der Flaschenzug sowohl zur über- als auch zur Untersetzung dienen kann.

Wenn die Steuerleinen eine matrixartige Anordnung bilden, ist die Beeinflussung eines Drachens nach Art eines Gleitschirms erleichtert. Dabei bezieht sich diese Anordnung auf einen Bereich unterhalb des Drachens, von dem aus die aerodynamischen Betätigungen gemeinsam vorgenommen werden können. Hierbei ist es günstig, wenn verschiedene Steuerleinen jeweils über ein gemeinsam angetriebenes Betätigungselement zusammengefasst angetrieben werden, da sich dadurch die Zahl der Antriebselemente verringert. Das gemeinsam angetriebene Betätigungselement kann dabei beispielsweise aus einem drehbar gelagerten Element, einer Wippe, einem Hebel, einer Zahnriemenscheibe oder dergl. bestehen, welches gemeinsam über einen Antriebsmotor bewegt wird. Die einzelnen Steuerleinen führen dann zu unterschiedlich gewählten Befestigungspunkten auf dem gemeinsamen Betätigungselement, so dass sich aus der Geometrie des Befestigungsorts der jeweilige Hub ergibt um, mit den die betreffende Steuerleine bewegt wird. Dabei können die einzelnen Steuerleinen auch noch durch Flaschenzüge oder dergleichen über- oder untersetzt werden. Auf diese Weise setzt sich dann die Bewegung des Betätigungselements in die gewünschte Geometrieveränderung des gesamten oder von Teilen des Windangriffselements um.

Bei einer anderen günstigen Ausführung besteht das Antriebselement aus einer elektrischen Winsch und/oder einem linearen Aktor, wobei der lineare Aktor durch ein pneumatisches Element gebildet wird, welches sich unter Überdruck in Querrichtung ausdehnt und dadurch in seiner Länge verkürzt bzw. umgekehrt. Derartige Elemente werden "künstlicher Muskel" genannt und vorzugsweise pneumatisch angetrieben.

Zur Energiegewinnung für die Steuerbetätigungen am Windangriffselement ist es günstig, wenn in einem in der Nähe des Windangriffselements vorgesehenen und strömungsgünstig verkleideten Behältnis eine Windturbine vorgesehen ist, welche auf einen elektrischen Generator wirkt, der dann einen elektrischen Energiespeicher auflädt. Bei Verwendung von pneumatischen Elementen als Aktoren kann auch eine Turbine vorgesehen sein, die einen nachgeschalteten Verdichter antreibt, der dann den Überdruck für die pneumatischen Elemente liefert. Als Energiespeicher dient in diesem Fall ein Druckspeicher.

In dem in der Nähe des Windangriffselements vorgesehenen Behältnis sind auch die Mittel zur Steuerung des Windangriffselements untergebracht, welche Ausgangssignale zur Ansteuerung der Antriebselemente (Aktoren) liefern. Hierbei sind insbesondere Mittel vorgesehen, um ein Steuersignal für das Antriebselement aus einem Signal für den Kurs des Fahrzeugs, die Windrichtung und/oder die Windgeschwindigkeit zu ermitteln.

Günstig ist es, wenn für die Steuerung von der Richtung und der Geschwindigkeit des scheinbaren Windes am Windangriffselement ausgegangen wird, da dessen Ausrichtung hierdurch bestimmt ist.

Das Windangriffselement wird bevorzugt durch eine Selbststeuervorrichtung (Autopilot) gesteuert, wobei ein Sensorelement vorgesehen ist, dem mindestens ein, vorzugsweise als Beschleunigungsmesser ausgestaltetes, Wandlerelement nachgeschaltet ist, welches mindestens mittelbar ein Steuersignal an das Antriebselement abgibt. Ein weiteres Sensorelement gibt ein Ausgangssignal mit Bezug auf seine Position und Ausrichtung im Raum ab, welche insbesondere auf die Position des Schiffes bezogen ist.

Wenn ein anderes Sensorelement vorgesehen ist, welches einen bevorstehenden oder bereits eingetretenen Strömungsabriss anzeigt oder als ein im Bereich der umströmten Oberfläche des Windangriffselements vorgesehenes Element ausgestaltet ist, welches bei anliegender Luftströmung ein Ausgangssignal abgibt, kann die Flugsteuerung so ausgelegt werden, dass im Falle eines Stalls ein Absinken des Windangriffselements verhindert wird.

Es hat sich weiterhin als vorteilhaft erwiesen, wenn Mittel vorgesehen sind, um ein Steuersignal zur räumlichen Ausrichtung des Windangriffselements oder für die Manöverfiguren extern durch eine mit dem Wasserfahrzeug verbundene Bordeinheit zu erzeugen. Weiterhin sind vorteilhaft Signalübertragungsmittel vorgesehen, um das dritte Steuersignal von der Bordeinheit an die Selbststeuervorrichtung zu übermitteln, wobei es sich bevorzugt bei diesem Steuersignal um ein Diffential-GPS oder ein anderes Navigationssignal handelt, welches eine Information über die Position des Windangriffselements zum Wasserfahrzeug enthält.

Wenn zusätzliche Speichermittel und Vergleichermittel vorgesehen sind, welche eine Speicherung von vorangehenden Zeitpunkten zugeordneten Signalen mit zeitlich später erscheinenden Signalen in der Weise ermöglichen, dass zeitlich aufeinander folgende Manöverzustände vergleichbar sind, kann eine vorhersehende Steuerung des Windangriffselements in dem Sinne erzeugt werden, dass bei Einleitung eines Manövers, die vorsehbaren Folgen für den Schiffsbetrieb berücksichtigt werden.

Bei einer anderen günstigen Ausführung der Erfindung ist das Antriebselement und/oder das Sensorelement in dem Behältnis vorgesehen ist, welches auch den Angriffspunkt für das Zugseil bildet und von dem Halte- und Steuerleinen ausgehen, mit denen das Windangriffselement verbunden ist. Dieses Behältnis ist bevorzugt strömungsgünstig ausgeführt und kann auch eine Windturbine zur Energiegewinnung für die aerodynamische Steuerung des Windangriffselements aufweisen.

Die dargestellte Erfindung eignet sich insbesondere für seegehende Schiffe oder solche mit Fahrtgebieten im Bereich großer Seen.

Bei einer günstigen Anwendung zur Energiegewinnung ist ein durch die Strömung des Wassers, insbesondere über eine Schiffsschraube oder Turbine, angetriebener Generator vorgesehen, welcher die erzeugte elektrische Energie einem Energiespeicher, insbesondere einem Wasserstoffgenerator zuführt. Der durch elektrolytische Spaltung des Wassers gewonnene Wasserstoff wird gespeichert und in einem Reservoir festgehalten.

Weitere bevorzugte Ausführungsbeispiele ergeben sich aus den Unteransprüchen.

Ein vorteilhaftes Ausführungsbeispiel ist in den Figuren dargestellt und wird nachfolgend beschrieben. Dabei wird das erfindungsgemäße Windangriffselement auch synonym kurz als "Drachen" bezeichnet. Es ist aber auch die Bezeichnung "Flügel" richtig, weil es sich um ein Fluggerät mit Tragflügelfunktion handelt.

Ein vorteilhaftes Ausführungsbeispiel ist in den Figuren dargestellt. Es zeigen:
Fig. 1 ein von dem erfindungsgemäßen Drachen-System gezogenes Schiff in schräger Draufsicht,
Fig. 1a ein Koordinatensystem, welches bei der nachfolgenden Beschreibung als Bezugssystem dient,
Fig. 1b ein Ausführungsbeispiel des erfindungsgemäßen Windangriffselements in Form eines Gleitschirms gemäß der Erfindung,
Fig. 2 ein Prinzipschaltbild der Steuerung des erfindungsgemässen Windangriffselements in schematischer Darstellung,
Fig. 3 die Steuerung des erfindungsgemäßen Windantriebssystems als Blockschaltbild in detaillierter Darstellung sowie
Fig. 4 die erfindungsgemäße Positionierungseinrichtung in Blockdarstellung.

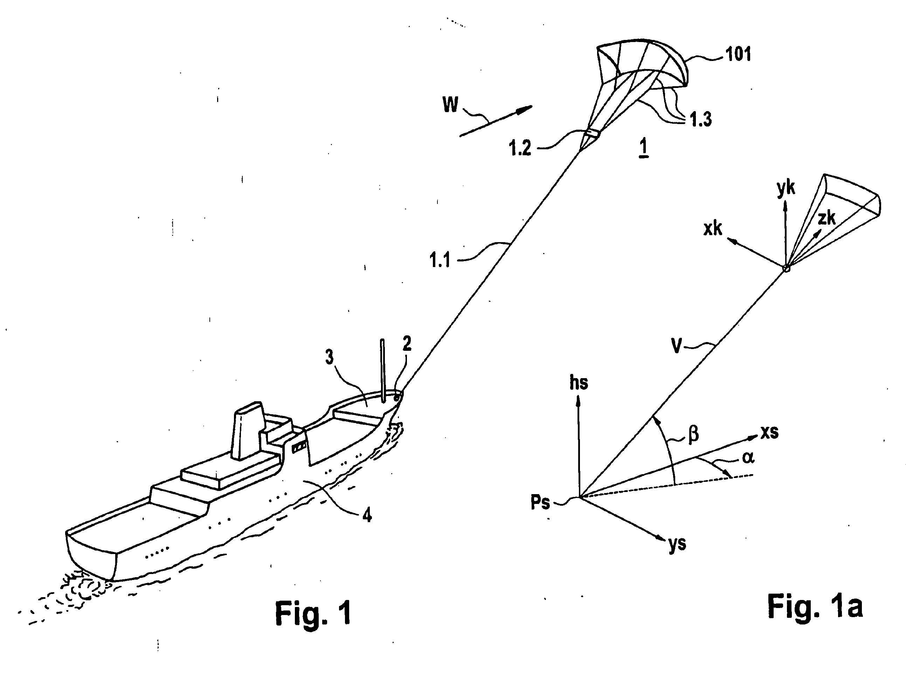

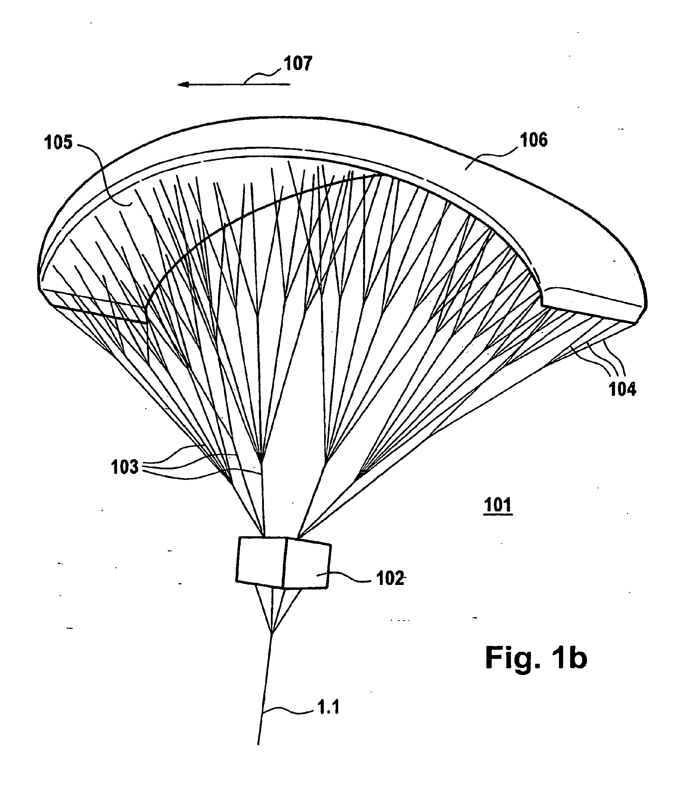

In Fig. 1 ist in den schräger Draufsicht ein von dem erfindungsgemäßen Drachensystem gezogenes Schiff wiedergegeben. Dabei ist ein Windangriffselement 1 über einen Zugseil 1.1 mit einer Kraftangriffsvorrichtung 2, die im Bugbereich eines Schiffes 4 vorgesehen ist, mit letzterem verbunden. Das Zugseil 1.1 ist zu einer zentralen Gondel 1.2 geführt, von der aus eine Anzahl von Halteleinen 1.3 ausgeht, welche zu dem nach Art eines Gleitschirms mit Drachenprofil ausgestalteten Windangriffselement 1 geführt sind und diesem die notwendige Form geben. Zu den Einzelheiten hierzu wird auf die Beschreibung weiter unten verwiesen. Die scheinbare Windrichtung im Bereich des Windangriffelements 1 ist mit W bezeichnet. Der entsprechende Windvektor ist durch seine Größe und Richtung gekennzeichnet. Gegebenenfalls wird seine zeitliche Veränderung noch durch eine die Böigkeit kennzeichnende Größe B gekennzeichnet, die zeitlich mittlere Abweichung der Windgeschwindigkeit vom mittleren Wert bildet und als Skalar darstellbar ist, der quasi den Radius einer Kugel um die Spitze des Windvektors W bildet.

In Fig. 1a ist ein Koordinatensystem wiedergegeben, welches bei der nachfolgenden Beschreibung als Bezugssystem herangezogen wird. Dabei gibt xs die Fahrtrichtung des Schiffes an, und ys ist die Richtung quer zur Fahrtrichtung. Das Koordinatensystem ist dabei fest mit einem Punkt Ps des Schiffes verbunden zu denken. Bei diesem Punkt handelt es sich bevorzugt um den Kraftangriffspunkt 2 im Bugbereich. Die Höhe hs entspricht dabei der Richtung der Achse z des konventionellen Koordinatensystems. Sie gibt die Höhe über dem Bezugspunkt Ps an. Dieser Bezugspunkt ist in bevorzugter Weise der Ort der Anbringung der GPS-Antenne eines Bord eigenen GPS-Gerätes, so dass die Koordinaten eines Punktes außerhalb von Ps, bei dem sich ein anderes GPS-Gerät befindet, durch Differenzbildung der von beiden Geräten ausgegebenen Koordinaten erzeugt werden können. (Sollte sich die GPS-Antenne das Bord eigenen GPS-Gerätes entfernt vom Bezugspunkt Ps befinden, so kann dies durch Hinzufügen einer festen Koordinatendifferenz berücksichtigt werden.)

Zur Vereinfachung soll nachfolgend von einem Polarkoordinatensystem ausgegangen werden, bei dem der Winkel a den Azimutwinkel und der Winkel β den Höhenwinkel bildet. Die Richtung des Vektors V zeigt dabei also auf die Gondel 1.2 des Windangriffselements 1. Es handelt sich hierbei gleichsam um ein "geographi-sches Koordinatensystem", da die Gondel 1.2 bzw. das Windangriffselement 1 sich im Wesentlichen auf der Oberfläche einer Kugel bewegen. Der Azimutwinkel a und Höhenwinkel β geben damit so etwas wie die geographische Länge und Breite der Position der Gondel auf der durch den Vektor V aufgespannten "Weltkugel". Die Länge des Vektors V gibt grob die Länge des Zugseils 1.1 an, wobei dessen Durchhang zunächst außer Betracht bleiben soll.

Die Gondel 1.2 des Windangriffselements ist nach einem eigenen Koordinatensystem mit den Richtungen xk, yk und zk ausgerichtet, wobei zk in die Richtung der Verlängerung des Vektors V weist. Die Drehung der Gondel 1.2 des Windangriffselements 1 um die Hochachse zk wird mit dem Gierwinkel (Yaw) bezeichnet. Durch eine Veränderung des Gierwinkels wird eine Änderung der Flugrichtung des Windangriffselements 1 bewirkt. Der Gierwinkel kann u. a. durch die aktive Ansteuerung von (weiter unten beschriebenen) Bremsklappen des das Windangriffselement 1 bildenden Gleitschirms verändert werden. Er bewirkt eine Richtungsänderung, und dieser Vorgang ist mit dem Lenken eines Lenkdrachens vergleichbar. Eine Drehung um die Längsachse xk stellt eine Rollbewegung (Roll) dar und wird nicht aktiv gesteuert. Aus der Rollbewegung bzw. der entsprechenden Abweichung der Richtung von zk von V lässt sich der Durchhang des Zugseils 1.1 auf Grund der Schwerkraft ermitteln, während die Drehung um die Querachse yk die Neigung (Pitch) des Windangriffselements um die Querachse bildet und durch Böen und deren Einwirkung auf das Zugseil 1.1 hervorgerufen sein kann. Dieses Bezugssystem bildet die Basis für das Verständnis der Beschreibung des weiter unten beschriebenen Schiff-Drachen-Systems.

In Fig. 1b ist ein Ausführungsbeispiel eines erfindungsgemässen Windangriffselements schematisch dargestellt. Das Windangriffselement bildet bei der dargestellten Ausführungsform einen Gleitschirm 101 mit einem Behältnis 102 für die Steuerung, wie es weiter unten näher beschrieben werden wird. Von dem an dem Zugseil 1.1 befestigten Behältnis 102 gehen Halteleinen 103 aus, welche in Verzweigungen 104 in Form eines Leinenbaums übergehen, die mit einer unteren textilen Deckschicht 105 verbunden sind. Eine obere textile Deckschicht 106 bildet den Abschluss nach oben. Die beiden Deckschichten sind durch interne - in der Figur nicht sichtbare - Verbindungsleinen oder entsprechende Verbindungselemente, wie zum Beispiel Textilrippen, zusammengehalten, wobei das durch die beiden Deckschichten gebildete Tragflügelprofil durch einen internen Luftüberdruck stabilisiert wird, der sich über Öffnungen an der Drachenvorderkante (in der Zeichnung links) aufbaut, welche in der Zeichnung aus Gründen der Übersichtlichkeit ebenfalls fortgelassen sind. Die Flugrichtung ist mit dem Pfeil 107 gekennzeichnet.

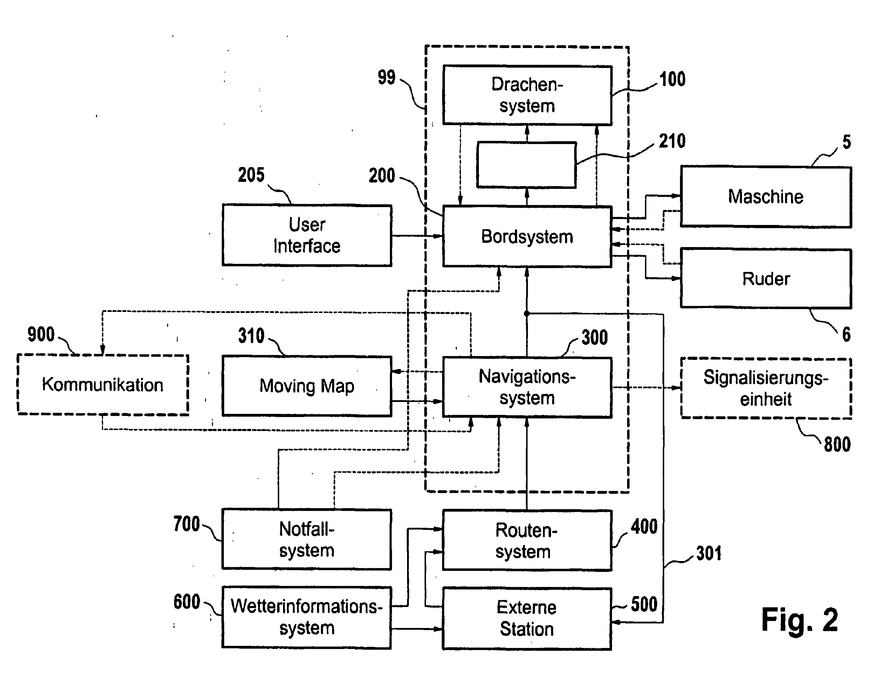

In Fig. 2 ist eine Prinzipdarstellung des erfindungsgemäßen Windantriebssystems als Blockschaltbild wiedergegeben. Das Bild dient auch zur Orientierung bei der nachfolgenden Beschreibung der einzelnen Systembestandteile. Die in der Übersichtsdarstellung verwendeten 100-ter-Bezugszeichen bilden auch die Gruppenbezeichnung der weiter unten jeweils detailliert dargestellten Systemteile. (Eine gestrichelte Linie 99 umgrenzt dabei diejenigen Baugruppen, welche mindestens einem konventionellen Schiff hinzugefügt werden müssen, damit es mit dem erfindungsgemäßen Windantrieb zusätzlich ausgestattet ist.) Das Windangriffssystem 100 umfasst das Windangriffselement sowie das dazugehörige Steuersystem, so weit es unmittelbar bei diesen angeordnet ist. Die Anordnung kann dabei sowohl in einer am Ende des Zugseils befindlichen Gondel, von der die Halteleinen ausgehen, angeordnet sein oder aber auch unmittelbar in das Windangriffselement eingearbeitet sein. Das Steuersystem umfasst im Wesentlichen einen Autopiloten, der die Lage- und Flugbahnsteuerung des Windangriffselements kontrolliert.

Das Windangriffssystem 100 ist über das Zugseil und eine Winsch 210 (einschließlich Zugseil) und gestrichelt dargestellte Kommunikationswege mit dem Bordsystem 200 verbunden mit einer Bedienoberfläche (User Interface) 205, welches ein Steuersystem umfasst, das sowohl die Drachenposition kontrolliert als auch an die Maschine 5 und das Ruder 6 des Schiffes die notwendigen Steuerbefehle abgibt. Mit dem Windangriffselement ist das Bordsystem über verschiedene Kommunikationswege verbunden, welche ermöglichen, sowohl die Drachenposition vom Bordsystem im Grundsatz vorzugeben als auch vom Windangriffssystem her Informationen zu empfangen, die für das Bordsystem von Bedeutung sind.

Dem Bordsystem 200 vorgeschaltet ist ein Navigationssystem 300, welches an das Bordsystem die einzuhaltenden Route des Schiffes unter Berücksichtigung von Kosten, Zeiten, Geschwindigkeit und Windausnutzung sowie gegebenenfalls die Windrichtung und Windstärke übermittelt. Zur Windinformationen kann auch eine Kennzeichnung gehören, welche die Böigkeit des Windes charakterisiert. Dazu können ferner noch Informationen betreffend den Seegang bzw. die daraus resultierende Schiffsbewegung kommen. (Die Wind- und Wetterdaten stammen dabei ursprünglich aus dem weiter unten dargestellten Wetterinformationssystem 600.) Das Navigationssystem wird unterstützt von dem navigatorischen Informationsfundus (Moving Map) 310.

Aus den Kurs-, Wind- und Welleninformationen werden Signale generiert, welche das Bordsystem 200 ansteuern und eine entsprechende Einstellung des Drachensystems 100 bewirken. Das Bordsystem 200 erzeugt weiterhin Ansteuersignale für die Maschine 5 und das Ruder 6.

Das Navigationssystem 300 wird von einem Routensystem 400 angesteuert, welches den Weg des Schiffes über die dem Schiffsbetrieb zu Grunde liegenden ökonomischen Basis ermittelt. Das Routensystem 400 wird auf der Basis von einer externen Station 500 vorgegebenen Daten angesteuert, welche mit den Daten eines Wetterinformationssystems 600 abgeglichen werden. Die von dem Navigationssystem 300 aktuell ermittelten Kursdaten werden über eine Rückkopplungsverbindung 301 (über Funk, Satellit) an die externe Station 500 zurückgemeldet. Die Daten sind auch von anderen mit dem erfindungsgemäßen System ausgestatten Schiffen empfangbar und können zur lokalen Aktualisierung des Wettersystems verwendet werden. Auf diese Weise können aktuelle, lokal bedingte Kursänderungen bei der weiteren externen Routenvorgabe wie berücksichtigt werden.

Es ist ersichtlich, dass die Positionierung des Drachensystems 100 in Abhängigkeit von den Kursdaten so erfolgt, dass sowohl auf Grund der Wetterbedingungen (aktuell vorherrschenden Winde und Seegangsbedingungen) als auch unter Berücksichtigung der ökonomischen Grenzbedingungen, welche einen möglichst Kosten sparenden Schiffsbetrieb erbringen sollen, eine optimale Routenvorgabe erfolgt.

Ein Notfallsystem 700 gibt im Falle eines unvorhergesehenen Ereignisses, welches ein sofortiges Handeln in Form eines Notmanövers erzwingt, die erforderlichen Steuerbefehle.

In weiteren Blöcken 800 bzw. 900 sind jeweils das Signalisierungssystem und Kommunikationssystem zusammengefasst, welches die Navigation mit weiteren Verkehrsteilnehmern abstimmt. Zum Signalisierungssystem gehört eine Navigationssicherheitsbeleuchtung sowie die Aussendung von eigenen Navigationsdaten über Funk, welche andere in der Umgebung befindliche Schiffe über das gesetzte Windangriffssystem und die beabsichtigte Route bzw. den aktuellen Kurs informieren. Das Kommunikationssystem umfasst dagegen alle Systeme, welche den weiteren Informationsaustausch betreffen.

Die Hauptwege des Datenflusses sind in Fig. 2 als durchgezogene Linien dargestellt, während die übrigen Nachrichtenwege gestrichelt wiedergegeben sind.

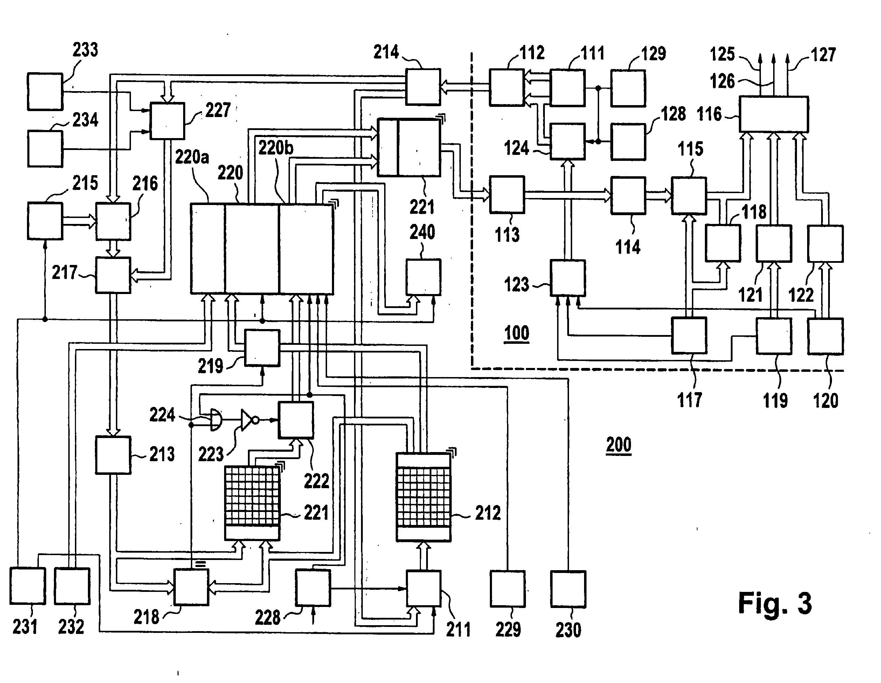

In Fig. 3 sind der Block 100, welcher das Windangriffssystem umfasst, sowie der Block 200 mit dem Bordsystem aus Fig. 2 näher dargestellt. Es wird hier die Positionierung und Steuerung des Drachens 101 beschrieben. Die Windrichtungs- und Windgeschwindigkeitsinformation, einschließlich Böigkeitskennwert sowie Seegangsinformationen gelangt in einen Zwischenspeicher 211, in dem diese Daten zur Pufferung festgehalten werden. Da sich die Windrichtung und alle Einstellungen des Drachens auf den scheinbaren Wind beziehen, ist die Kursinformation bei der Verarbeitung entbehrlich. Die Einstellung und das Manövrieren des Windangriffselements in Bezug auf das Schiff erfordert keine Kenntnis des aktuellen Kurses, da sich alle Manöver in Bezug auf das Schiff und unter Einwirkung des auf den Drachen einwirkenden scheinbaren Winds beziehen. Die Windinformationen stammen beim Setzen des Drachen 101 zunächst aus dem Wetterinformationssystem 600 in Figur 2, wenn es darum geht, den Drachen zu positionieren. Sobald dessen eigene Windmessung nach dem Start jedoch in Funktion ist, wird der scheinbare Wind am Ort des Windangriffselements selbst bestimmt, da dieser für die Positionierung bestimmend ist.

Die Wind- und Seegangsdaten bilden insgesamt einen Datensatz, welcher einen eine Nachschlagetabelle bildenden Speicher 212 für die Sollposition und den Manövertyp des Windangriffselements adressiert. Diese Nachschlagetabelle ist wie ein normaler adressierbarer Speicher organisiert, wobei die Ausgangsdaten des Zwischenspeichers 211 als Adressensignale die einzelnen Speicherplätze adressieren, bei denen die zu den adressierten Daten gehörigen Zustandsdaten des Windangriffselements abgelegt sind. Eine derartige "Nachschlagetabelle" verknüpft nach Art eines "Nur-Lese-Speichers" (ROM) gemäß einem vorgegebenen funktionalen Zusammenhang die Eingangs- und Ausgangsdaten miteinander, lässt sich also als mathematische Zuordnung (Funktion) verstehen. Die entsprechenden Blöcke bilden jedoch nur eine beispielhafte Realisierung und können auch durch beliebige andere Funktionsglieder oder Baugruppen ersetzt werden. Hierbei kann es sich beispielsweise um einen Mikroprozessor handeln, bei dem die Steuerungssoftware in einem entsprechenden Speicher festgehalten ist oder aber auch um eine elektrische Schaltung, bei der der funktionale Zusammenhang nach Art eines Analogrechners durch die beteiligten elektrischen Komponenten festgelegt ist. Die Darstellung als Nachschlagetabelle ist hier der Übersichtlichkeit halber gewählt, weil eine Lösung mit einem Mikroprozessor beispielsweise nur deswegen unübersichtlicher darzustellen ist, weil die verschiedenen nacheinander abzuwickelnden Programmschritte aufwendige Überlegungen dahingehend erfordern, welche Programmteile dem Mikroprozessor nacheinander zuzuführen sind.

Bei der gewählten Ausführung können die Steuersignale parallel verarbeitet werden, wobei allerdings solche Schaltglieder, die eine Aktivierung der dargestellten Blöcke zu bestimmten Zeiten und die entsprechenden Regelungen bewirken, nicht dargestellt sind. Es wird der Einfachheit halber davon ausgegangen, dass ein eingehendes Steuersignal, welches von bisher anstehenden Signalzustand abweicht, die Verarbeitung in den nachfolgenden Blöcken auslöst, welche den betreffenden erreichten Zustand beibehalten, bis eine Signaländerung eine neue Verarbeitung erzwingt.

Die Zustandsdaten beinhalten also zum einen die Sollposition des Windangriffselements, d. h. seine Richtung in Bezug auf das Schiff und die auszubringende Länge des Zugseils. Darüber hinaus enthalten sie gegebenenfalls auch eine Informationen darüber, ob und wenn ja nach welchem abgespeicherten Programm der Drachen 101 manövriert werden soll. Während der Drachen in einigen Positionen statisch, d. h. feststehend geführt wird, ist es für den Schiffsbetrieb in bestimmten Fällen günstiger, wenn der Drachen dynamisch geführt wird, d. h. vorbestimmte Flugfiguren ausgeführt werden, da sich dadurch seine Relativgeschwindigkeit zum Wind und infolgedessen auch seine Zugleistung erhöht. In einem weiteren Speicher 213 wird die aktuelle Position des Drachens festgehalten, wie sie durch das Navigationssystem des Drachens 101 bestimmt wird.

Die im Speicher 213 festgehaltene Ist-Position des Drachens bezieht sich auf das Schiff und wird vorzugsweise durch Differenzbildung zweier GPS-Signale ermittelt. Hierbei handelt es sich zum einen um den GPS-Empfänger 124 des Drachens 101 innerhalb des Drachensystems 100, welches mit dem fliegenden Drachen 101 verbunden ist. Die in der Flugposition des Drachens 101 ermittelten Positionsdaten werden mittels eines Senders 112 an einen Empfänger 214 übermittelt, welcher sich an Bord des Schiffes befindet. Ein weiterer GPS-Empfänger 215 ist ebenfalls an Bord des Schiffes vorgesehen. Sein Ausgangssignal wird zusammen mit dem Ausgangssignal des Empfängers 214 einer Subtrahiereinheit 216 zugeführt, mit der das Differential-GPS-Signal erzeugt wird. In einem der Subtrahiereinheit 216 nachgeschalteten Block 217 werden die Differenz-Positionsdaten in Polarkoordinaten umgerechnet, welche sich auf den Abstand zwischen der Winsch 2 und in die Position des Windangriffselements beziehen. Es handelt sich um die Winkel a und β entsprechend Fig. 1a sowie die Seillänge "L". Die so erhaltenen Differential-GPS-Positionsdaten weisen eine große Genauigkeit auf, wenn sie gleichzeitig ermittelt werden und der GPS-Empfänger des Schiffes an einem Ort installiert ist, der möglichst wenig von Schiffsbewegungen betroffen ist bzw. wenn die Bewegungen kompensiert werden.

Weiterhin ist es dabei notwendig, die Koordinatendifferenz zwischen der Positionen der Winsch und des GPS-Empfänger des Schiffes durch Subtraktion eines festen Wertes zu berücksichtigen. Die durch den so gebildeten Differential-GPS-Empfänger ermittelte Position wird in Zeitabständen ermittelt. Falls sie in ihrer Präzision nicht ausreicht, kann sie durch Werte, die über Beschleunigungsaufnehmer 117, 119 und 120 ermittelt werden, gestützt werden. Die entsprechenden Berechnungen, die eine Integration enthalten, wird in der Baugruppe 123 ausgeführt. Da es sich innerhalb der Zeitintervalle, in denen integriert werden muss, lediglich um die Zeiten handelt, die bis zum nächsten GPS-Positions-Signal vergehen, brauchen die Integratoren keine Qualitätsanforderungen zu erfüllen, die eine Stabilität über lange Zeiträume garantieren würde. (Die Beschleunigungsaufnehmer dienen an sich zur Stabilisierung der Flugmanöver, wie es weiter unten beschrieben ist - erhalten somit also eine Zweitfunktion). Des weiteren sind noch ein Höhenmesser 129, vorzugsweise als Luftdruckmesser ausgeführt, und ein Erdmagnetfeldsensor 128 vorgesehen, deren Daten ebenfalls dem Speicher für das Navigationssignal 124 zugeführt werden.

Eine weitere Möglichkeit zur Ermittlung der Ist-Position des Windangriffselements in Relation zum Schiff ist die Nutzung der zum Schiff übertragenen Daten des Höhenmessers 129 und des Erdmagnetfeldsensors 128. Diese Daten werden auf dem Schiff in Block 227 übertragen und festgehalten. In Block 227 findet dann eine Differenzbildung mit den Daten des Höhenmessers 233 am Schiff und des Erdmagnetfeldsensors 234 am Schiff statt. Handelt es sich bei dem Höhenmesser 129 um einen Luftdruckmesser, können für die Bestimmung des Luftdrucks am Schiff aber auch Wetterdaten aus Block 600 (Isobaren) genutzt werden. Die so ermittelten Positionsinformationen werden Block 217 zugeführt und gegebenenfalls mit den GPS-Daten abgeglichen. Auf diese Weise stützen sich die Positionsinformationen zweier unabhängiger Systeme gegenseitig, und bei Ausfall eines Systems stehen die benötigten Daten weiterhin zur Verfügung.

Die aus dem Speicher 212 ausgelesene Sollposition des Drachen wird nun einerseits einem Vergleicher 218 zugeführt, der ein Signal ausgibt, wenn die Ist-Position des Windangriffssystems 100, die in dem Speicher 213 vorhanden ist, mit der aus dem Speicher 212 ausgelesenen Sollposition übereinstimmt. In diesem Fall wird über eine Freigabeschaltung 219 ein den ausgewählten Manövertyp kennzeichnender Datensatz aus dem Manövertyp-Speicher 220 ausgelesen. (Dabei kann ein statischer Flugzustand sich aber auch dadurch auszeichnen, dass der Drachen keine Manöver ausführt, sondern seine Flugposition beibehält. Hierbei handelt es sich um den Manövertyp "Null".)

Bei Ansteuerung dieses Manövertypspeichers 220 wird also ein Flugprogramm vom sequenziellen Typ ausgelesen und an den Autopiloten des Windangriffssystems 100 übertragen. Das Ausgangssignal des Speichers 220 gelangt dabei an einen Sender 221, der die Daten emittiert und einem Empfänger 113 des Windangriffssystems 100 zuführt. Vom Ausgang des Empfängers 113 gelangt das Signal in eine Autopiloten-Baugruppe und dort in eine Manöversteuereinheit 114. Diese empfängt die für ein bestimmtes sequenzielles Flugmanöver kennzeichnenden Signale und setzt diese in Kurvenwerte um, die dem Flugprozessor 116 zugeleitet werden, welcher das betreffende Flugmanöver ausführt. Dabei wird der einzustellende Wert in einen Kurvenwertvergleicher 115 überführt, dem andererseits das Eingangssignal des Gierwertmessers 117 zugeführt wird. Der Flugprozessor 116 erzeugt jetzt an seinem betreffenden Ausgang 125 über ein entsprechendes Antriebselement am Drachen 101 durch unsymmetrisches Abbremsen des Drachens 101 oder einer entsprechenden aerodynamischen Verformung Kurvenflug in der vorgegebenen Folge und Dauer. Die anderen aerodynamischen Effekte, welche durch die beiden anderen Ausgänge des Flugprozessors 116 angesteuerte werden sind das Anstellen des Flügels und das Reffen, wie es weiter unten beschrieben wird.

Aus dem Speicher 220b für die Positionierung wird auch die Winsch 240 zum Fieren auf eine bestimmte Seil-Solllänge angesteuert.

Um ein Pendeln um die Hochachse zu vermeiden, wird zusätzlich ein durch einen Hochpass gefiltertes Signal dem Flugprozessor 116 mit versetzter Phasenlage dem Steuersignal überlagert zugeführt, so dass ein Aufschwingen vermieden ist. Während über den Ausgang 125 Gierbewegungen gesteuert werden können, wird über den Ausgang 126 das Anstellen des Tragflügels eingestellt. Bekanntlich lässt sich durch das Maß des Anstellens eines Flügels das Verhältnis von Flugwiderstand und Auftrieb optimieren. Über einen weiteren Ausgang 127 kann das Reffen des Drachens 101 eingeleitet werden. Ein Reffen verändert den Auftrieb und Widerstand und kann bei einzelnen Flugmanövern erforderlich sein.

Da der Drachen fest am Zugseil geführt ist, wird er durch die Zugwirkung des Seils in seinem Auftriebsschwerpunkt bezüglich seiner Roll- und Neigungsbewegungen automatisch stabilisiert. Um aber auch hier ein Schwingen auszuschließen, wird in entsprechender Weise jeweils ein Lagesignal von einem Rollgeber 119 und einem Neigungsgeber 120 über entsprechende invertierende Hochpassfilter 121 und 122 zum Flugprozessor übermittelt, so dass ruckartige Lageänderungen des Windangriffselementes 101 vermieden und kompensiert werden.

Wenn der Drachen sich also in seiner vorgegebenen Position befindet (am Ausgang des Vergleichers 218 erscheint ein diesen Zustand kennzeichnendes Ausgangssignal), so wird der ausgewählte Manövertyp ausgelesen, welche den Drachen dazu veranlasst, ein vorgegebenes zyklisches Flugprogramm auszuführen. Ist dieser Manövertyp übertragen, erfolgt die Steuerung selbsttätig vom Autopiloten des Windangriffselements, und die Einheit 200 braucht nicht mehr zu reagieren, sofern der Drachen nicht durch unvorhergesehene Ereignisse seine Sollposition verlässt.

Stimmt die Sollposition des Windangriffselements 101 nicht mit seiner vorgegebenen Position überein, sei es, dass sich die Vorgabeposition, welche aus dem Speicher 212 ausgelesen wird, verändert hat - was auch beim Setzen des Drachens der Fall ist -, oder sei es, dass der Drachen im Laufe des Manövrierens seine Position verlassen hat, so verschwindet das Ausgangssignal am Ausgang des Vergleiches 218, und der über das Schaltglied 219 aktivierte Manövertyp des Speichers 220 endet. Am Ausgang des Speichers für den Manövertyp 220 (linker Teil) erscheint das Signal "Null", was vom Autopiloten des Windangriffssystems 100 dahingehend interpretiert wird, dass das zuletzt eingespeicherte Manöver nicht mehr ausgeführt wird. Statt dessen wird die Ist-Position des Drachen, welche aus dem Speicher 213 ausgelesen wird und über GPS ermittelt wurde, mit der Soll-Position aus dem Speicher 212 mittels einer Positionskorrigiereinheit 221 verglichen und ein Manöver ermittelt, welches den Drachen in die Sollposition führt. Die Korrigiereinheit 221 ist wieder als Nachschlagetabelle ausgebildet, wobei die Soll- und die Ist-Position (wieder bezogen auf das Schiff) zu einem gemeinsamen Adressiersignal zusammengefasst werden und die Kennzeichnung eines entsprechenden Korrekturmanövers des Windangriffselements von der Ist-Position A in die Soll-Position B ausgelesen wird. Es ist nämlich zu beachten, dass je nach Start und Zielpunkt (und auch gegebenenfalls abhängig von den Wind- und Wellenbedingungen) unterschiedliche Manöver gewählt werden müssen, um den Drachen zu manövrieren. Mit den angegebenen Maßnahmen können aber beliebige Drachenmanöver ausgewählt und ausgeführt werden.

Spielen Wind- und Seegang bei den auszuführenden Manövern eine Rolle, so können diese Daten vom Speicher 211 durch die Nachschlagetabellenspeicher 212 und 221 "durchgeschleift" werden, so dass sie im Datensatz für die Auswahl eines spezifischen Manövers noch vorhanden sind und ein geeignetes Manöver ausgewählt werden kann. Hierbei geht es allerdings nicht um den Ausgleich einzelner Ereignisse, sondern um generelle Einstellungsrichtlinien, welche beispielsweise beinhalten können, dass bei hohem Seegang der Drachen relativ so geflogen wird, dass die durch die Wellenrichtung auf das Wasserfahrzeug wirkenden Kräfte möglichst kompensiert werden können. So wäre also bei stark krängendem Schiff eine Dracheposition mit Querkomponente und bei stark stampfendem Schiff eine Vorauskomponente zu bevorzugen. Aus diesem Grunde wird ein Ausgangssignal des Blocks 231 zur Erfassung des Seegangs direkt dem Block 211 zugeleitet, um eine Information zuzufügen, welche bei der Auswahl der entsprechenden Drachenposition und Manövrierung im oben beschriebenen Sinne mitwirkt. Eine weitere Funktion dieser Verbindung besteht darin, Teile von Flugmanövern so auszuwählen, dass sie den Beschleunigungen aufgrund des Seegangs entgegenwirken. Hierzu gehört, dass Manöver mit zyklischen Flugbahnen, bei denen unterschiedliche Zugkräfte am Zugseil zu unterschiedlichen Zeiten einwirken, so geflogen werden, dass diese Kräfte phasenversetzt zu den Beschleunigungen auftreten, welche durch den Seegang hervorgerufen werden. Auf diese Weise werden die Schiffsbewegungen insgesamt herabgesetzt. Diese Kompensation bzw. Herabsetzung von Schiffsbewegungen durch unterschiedliche Zugkräfte, welche durch das Manövrieren hervorgerufen werden, stören die übrigen angewandten Verfahren für die Seegangskompensation nicht. Dies hat seinen Grund darin, dass von vornherein reduzierte Schiffsbewegungen weniger Aufwand bei der Reduzierung von deren Auswirkungen auf die Drachenflugbahn erfordern. Wegen der Kompensation der einzelnen Schiffsbewegungen wird auf die Beschreibung des Blocks 231 weiter unten verwiesen.

Für den Positionswechsel wird der rechte Teil des Speichers 220 über ein Schaltglied 222 mit dem aus der Korrigiereinheit 221 ausgelesenen Datensatz adressiert, wobei das Schaltglied 222 vom Ausgangssignal des Vergleichers mittels eines Inverters 223 aktiviert wird, wenn das Schaltglied 219 nicht aktiviert ist, also Soll- und Ist-Position ungleich sind.

Des Weiteren kann auch die Flugstabilität des Windangriffselements für seine Position eine Rolle spielen. Ein am Drachen vorgesehener Mehrrichtungs-Staudruckmesser 111 bildet einerseits einen Windmesser und übermittelt andererseits für die in Flugrichtung gemessene Komponente den Zustand einer zu geringen Anströmung des Drachens durch ein entsprechendes Signal, welches zusammen mit der Erzeugung eines Positionswechselmanövers auch die Winschsteuerung 240 ansteuert, wodurch der Drachen bei dem Positionswechsel beschleunigt wird, so dass die Anströmung wieder heraufgesetzt wird. (Es ist ersichtlich, dass die Winsch auch bei "gewollten" Positionsänderungen aufgrund von Wind- und Wellendaten über den rechten Teil des Speichers 220b mit angesteuert werden kann, damit beispielsweise eine Änderung der Höhe des-Windangriffselements herbeigeführt werden kann.)

Für die Ermittlung der wahren Windrichtung und Windgeschwindigkeit weist der Windmesser in unterschiedliche Richtungen gerichtete Staurohre mit Druckdosen auf, welche getrennt ausgewertet werden. Aus den Druckwerten der drei rechtwinklig zueinander gerichteten Druckdosen mit den höchsten Druckwerten lässt sich die Richtung und Geschwindigkeit des Windes in Bezug auf die Ausrichtung des Windmessers 111 bestimmen. Wird das Ausgangssignal des Magnetfeld-Sensors 128, der eine Brückenschaltung aus magnetisch empfindlichen Widerständen enthält und somit die Ermittlung der Richtung der Feldlinien des Erdmagnetfeldes ermöglicht, mit in Betracht gezogen, so kann die Richtung des Windes auf die Nordrichtung bezogen werden und kann somit als Richtung des scheinbaren Windes beim Windangriffselement zu Wasserfahrzeug hin übertragen werden. Dort erfolgt dann gegebenenfalls noch die Korrektur von magnetisch Nord zu geographisch Nord.

Ein zu dem Block 211 gerichteter Pfeil deutet an, dass dabei die normale Navigation des Drachens außer Funktion gesetzt wird. Über ein Oder-Gatter 224, das dem Inverter 223 vorgeschaltet ist, wird auch die übrige normale Manöversteuerung unterbunden. (Dies gilt entsprechend auch für die nachfolgend zu beschreibenden Blöcke 228, 229, 230 und 232, welche weitere Sonderfunktionen auslösen. Die zugehörigen Signalverbindungen, sind dort aber aus Gründen der Übersichtlichkeit weggelassen worden.)

Über den Block 228 wird das Notfallmanöver "Notabwurf" durch Auswahl und Start des zugehörigen Manövertyps über den rechten Teil des Manövertypspeichers 220b eingeleitet, der die jeweiligen Programmierungen enthält. Dieses Manöver wird notwendig, wenn vom Windangriffselement für das Schiff durch ungünstige Umstände oder einen Unfall eine große Gefahr ausgeht (z.B. durch Zusammenstoss mit einem Hindernis). Bei diesem Manöver wird das Windangriffselement vollständig vom Schiff getrennt.

Über die Blöcke "Setzen" 229 und "Bergen" 230 werden die entsprechenden Manöver durch Auswahl und Start des betreffenden Manövertyps über den rechten Teil des Manövertypspeichers 220b eingeleitet, der die jeweiligen Programmierungen enthält.

Über einen Block 231 "Schiffsbewegungen" wird über einen entsprechend ausgerichteten Beschleunigungsaufnehmer die in Richtung des Zugseils gerichtete Beschleunigungskomponente ermittelt und nach Integration ein Signal generiert, welches die Schiffsbewegungen in Richtung des Zugseils beschreibt. Dieses Signal wird dem Bord-GPS-Empfänger zugeführt, welcher ein für die Position der Winschsteuerung 240 korrigiertes Positions-Signal liefert, falls der Empfänger bzw. die Antenne nicht selbst in dieser Position montiert ist. Würde dieses GPS-Positionssignal unmittelbar zusammen mit dem über den Empfänger 214 empfangenen GPS-Positions-Signal des Drachensystems 100 ausgewertet und zu Führung des Drachens 101 verwendet, würde dieser in seiner Steuerung den Seegangsbewegungen der Winsch folgen. Da dieser aber seine Manöver in Bezug auf eine gedachte beruhigte Schiffsposition fliegen soll, wird das integrierte Signal des Beschleunigungsaufnehmers in Block 231 zusätzlich dem GPS-Empfänger 215 zugeführt, um (als Störung) von dem Signal subtrahiert zu werden, welches dem Block 216 zur Verarbeitung zugeführt wird, so dass dort das Positionssignal einer "beruhigten Plattform" verarbeitet wird. Auf diese Weise fliegt der Drachen 101 Manöver, die von Seegangsstörungen befreit sind. Es ist nämlich ersichtlich, dass sich hauptsächlich die in Zugseil-Richtung wirkenden Seegangs-Anteile für das Flugobjekt bemerkbar machen, wohingegen quer dazu gerichtete Anteile lediglich zu einer gerade bei langem Zugseil verschwindenden Änderung der Winkel a und β des Flugvektors beitragen und somit vernachlässigbar sind.

Um bei dem dargestellten Ausführungsbeispiel nicht permanent in die Situation zu kommen, bei starkem Seegang ein anstehendes Flugmanöver durch Feststellung einer Abweichung am Differenzblock 218 zu unterbrechen und einen gesteuerten "Flug" in die korrekte Position (in diesem Fall durch Aktivierung der Winsch 240 über den rechten Manöverblock 220b) ausführen zu müssen, besteht vom Block 231 eine Direktverbindung zur Winschsteuerung 240. Diese erhält unmittelbar den Befehl, entsprechend der Feststellung der Seegangsbewegung in Zugseilrichtung durch den Block 231 zu fieren und zu holen, so dass die Schiffsbewegungen für den Drachen unmittelbar ausgeglichen sind. Erst, wenn dieser Ausgleich aus irgendeinem Grunde nicht mehr ausreichend sein sollte, wird eine Positionskorrektur durch ein entsprechendes Manöver ausgelöst.

Um auch Manöver manuell auslösen zu können, sind über eine Bedienereingabe 232, welche Teil des Bedieneroberfläche 205 in Figur 2 ist, die entsprechenden Eingabebefehle möglich. Über entsprechende Befehle können in dem linken Teil 220a des Manöverspeichers für manuelle Befehle unter Unterdrückung der übrigen Signalausgabe aus diesem Speicher direkt Steuerbefehle an die Autopiloteneinheit und die Winschsteuerung 240 übermittelt werden. Hierbei handelt es sich um die Funktionen "Links", "Rechts", "Gerade", "Reffen", "Entreffen", "Anstellen (+)", "Anstellen (-)", "Winsch (+)" und "Winsch (-)". Alle Befehle können in ihrer Intensität moduliert werden.

Bei einer in der beschriebenen Ausführung eingeschlossenen Variante erfolgt, ein "vorausschauendes Manövrieren" in der Weise, dass in das System zur Berechnung der aktuellen Position des Windangriffselements fiktive Wind- und Kursdaten eingegeben werden und die sich dann einstellende Konfiguration zur Information angezeigt wird. Hieraus kann dann die Schiffsführung das vorhersehbare Verhalten des Systems abschätzen und die Navigation entsprechend einstellen. Diese Mehrfachbearbeitung der Daten nach Art der Eventualvorausschau ist in Figur 3 durch Mehrfachwinkel an den Ecken verschiedener Speicherelemente dargestellt, was andeuten soll, dass die Inhalte dieser Speicher unabhängig von der aktuellen Prozesssteuerung mehrfach ausgewertet werden. Hierbei sind also zusätzliche Speichermittel und Vergleichermittel vorgesehen, welche eine Speicherung von vorangehenden Zeitpunkten zugeordneten Signalen mit zeitlich später erscheinenden Signalen in der Weise ermöglichen, dass zeitlich aufeinander folgende Manöverzustände unter Zugrundelegung verschiedener - auch fiktiver - Eingangsdaten vergleichbar sind.

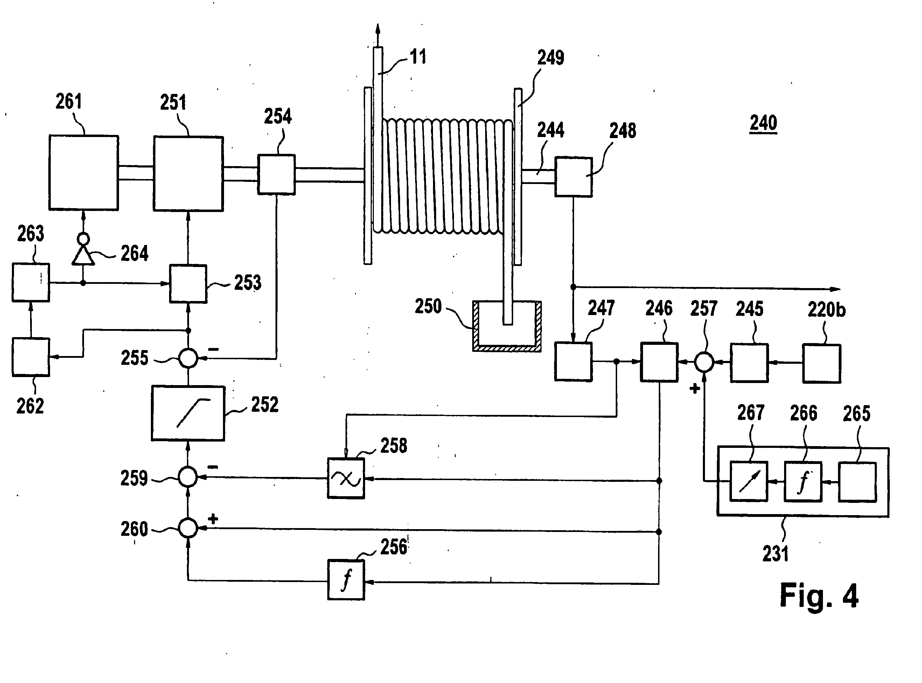

In Figur 4 ist ein Ausführungsbeispiel der Winschsteuerung 240 gemäß Figur 3 des erfindungsgemäßen Positioniersystem für ein Windantriebssystem näher dargestellt. Die mechanischen Elemente der Winsch gruppieren sich dabei auf einer gemeinsamen Antriebswelle 244. Dabei wird das Ausgangssignal des rechten Teils des Speichers 220b in Figur 3, welches die auszubringende Seillänge repräsentiert, einem Speicher 245 zugeleitet, der diese Sollseillänge als digitalen Zählwert fest hält. Der im Speicher 245 enthaltene digitale Wert wird einem Proportionalvergleicher 246 zugeführt, der diesen Wert von einem weiteren Wert abzieht, der ihm von einem Impulszähler 247 zugeleitet wird. Dieser Impulszähler 247 wird seinerseits von einem - insbesondere photoelektrisch arbeitenden - Positionsgeber 248 angesteuert, der mit einem das Zugseil 11 führenden Spillkopf 249 verbunden ist. Die ausgebrachte Länge des Zugseils 11 kann aber auch auf andere Art und Weise übermittelt werden. So beispielsweise über am Zugseil selbst angebrachte optische, magnetische oder sonstige Markierungen, die von entsprechenden Sensoren erfasst werden.

Das Zugseil 11 wird über eine mehrfache Umschlingung um den Spillkopf 249 reibschlüssig angetrieben, wobei das Seil in einen nur schematisch dargestellten Vorratsraum 250 gelagert ist. Bei einer nicht dargestellten alternativen Ausführung kann das Zugseil auch von einer Seiltrommel abgewickelt werden, die dann den Spillkopf ersetzt. Ein weiteres vorteilhaftes, nicht dargestelltes, Ausführungsbeispiel ist ein Spillkopf nebst einer Seiltrommel, die als Seilspeicher dient. Im Übrigen bleibt der Aufbau aber entsprechend.

Der Spillkopf zu 249 wird von einem Motor 251 angetrieben. Der Motor weist vorzugsweise ein integriertes, nicht näher dargestelltes Getriebe auf. Der Impulszähler 247 ermittelt so die tatsächlich abgewickelte Seillänge durch Zählen der vom Positionsgeber 248 abgegebenen im Pulse, deren Anzahl proportional zur Umdrehung des Spillkopfes 249 ist. Bei einer nicht dargestellten alternativen Ausführung kann die Länge durch ein direkt auf dem Seil aufliegendes Reibrad mit Pulsgeber ermittelt werden. Das von den Proportionalvergleicher 246 abgegebene Signal entspricht also - je nach seiner Polarität - der von dem Spillkopf zu 249 noch auf- bzw. abzuwickelnden Seillänge. Dieses Ausgangssignal des Proportionalvergleichers 246 wird unmittelbar als Proportionalanteil über einen Summenpunkt 260 einem Kennliniengeber 252 zugeführt, der ein der Seillänge proportionales Steuersignal für den Motor 251 erzeugt. Das Ausgangssignal des Kennliniengebers ist nach einem linearen Verlauf zu hohen und niedrigen Wert hin begrenzt, so dass sich eine nicht lineare Charakteristik ergibt. Die Steilheit der Kennlinie ist an die Seileigenschaften insoweit angepasst, als hierdurch auch eine Überdehnung verhindert wird. Der lineare Bereich der Kennlinie ist den Elastizitätseigenschaften des Seils angepasst, während sich bei drohender Überbelastung eine Kraftbegrenzung ergibt, so dass das Seil frei auslaufen kann, wenn es zu brechen droht.

Bis zu den genannten Grenzwerten ist also die Ansteuerung des Motors 251 vorzugsweise proportional zur auszubringenden bzw. einzufahrenden Seillänge. Daraus ergibt sich eine Charakteristik des Antriebs, der mit derjenigen einer Feder vergleichbar ist. Wenn es sich bei dem dargestellten Motor 251 um einen Elektromotor handelt, dessen Drehmoment den zugeführten Strom proportional ist, so ist es ausreichend, den Ausgang des Kennliniengebers 252 mit der in diesem Fall als Stromquelle ausgebildeten Energiequelle 253 zu verbinden. Der Kennliniengeber gibt für die jeweilige Eingangsgröße ein Drehmoment vor, welches auf der Motorabtriebswelle wirken soll. Die Steilheit der Kennlinie definiert die "Reaktionsfähigkeit" der Winsch auf die entsprechenden Ansteuersignale. Sie ist einstellbar, um verschiedenen Betriebsbedingungen (beispielsweise der Größe des Windangriffselements) gerecht zu werden. Im Betrieb wird die Steilheit der Kennlinie so eingestellt, dass sich die Winschbewegungen unterhalb eines zu "nervösen" Reaktionsverhaltens einpegeln.

Bei Antrieben anderer Art kann es jedoch vorkommen, dass die Energiequelle 253 eine andere Energiegröße liefert, welche nicht unmittelbar zu einem proportionalen Drehmoment am Antriebsmotor 251 führt. Das kann zum Beispiel der Fall sein, wenn in einer explosionsgefährdeten Umgebung, wie es beispielsweise auf Tankern der Fall ist, keine elektrischen Antriebe verwendet werden können. In diesem Fall kann der Motor 251 als Dampf- oder Hydraulikmotor - insbesondere aber als volumenverstellbarer Hydraulikmotor oder als Paarung von volumenverstellbarer Hydraulikpumpe und Hydraulikmotor - ausgeführt sein, wobei auf der Abtriebswelle eine Momentenmesseinrichtung 254 vorgesehen ist, deren Ausgangssignale einem dem Kennliniengeber 252 nachgeschalteten Rückkopplungspunkt 255 mit negativer Polarität zugeführt wird.

Das von der Energiequelle abgegebene Signal wird dabei solange erhöht, bis es durch das Gegenkopplungssignal von der Momentenmesseinrichtung 254 kompensiert wird. Auf diese Weise lässt sich mit beliebigen Antriebsmotoren die gewünschte Charakteristik erzeugen. Weiterhin ist in dem Signalweg zwischen dem Proportionalvergleicher 246 und dem Kennliniengeber 252 ein Integrator 256 eingeschaltet, welcher eine bleibende Regelabweichung bei der Einstellung der Seillänge dadurch verhindert, dass er das dem Kennliniengeber zugeführte Signal umso mehr vergrößert bzw. verkleinert, je länger dieses ansteht. Weiterhin ist parallel dazu ein einstellbares Filter 258 mit einem nachgeschalteten Subtrahierpunkt 259 eingeschaltet, wobei das Filter so bemessen ist, dass er insbesondere für Resonanzfrequenzen das Seils einschließlich Winsch durchlässig ist und diese durch Gegenkopplung unterdrückt. Das Filter 258 ist in seiner Frequenz variabel, wobei die Frequenzeinstellung vom Ausgangssignal des Impulszählers 247 beeinflusst wird, welcher einen Wert ausgibt, der der ausgebrachten Seillänge entspricht.

Auf diese Weise wird das Filter in seiner Frequenz entsprechend der Seillänge verändert, so dass mögliche Resonanzen, welche hinsichtlich ihrer Frequenz von der Seillänge beeinflusst werden, kompensierbar sind. Bei dem dargestellten Ausführungsbeispiel ist lediglich die Tendenz der Änderung berücksichtigt, wenn man einmal von einer linearen Verstellung ausgeht. Soll eine präzise Anpassung erreicht werden, die dem quadratischen oder sonstigen funktionalen Verlauf folgt, so ist ein entsprechender Funktionsgeber in die Leitung vom Impulszähler einzuschalten, welcher ebenfalls in Form einer digitalen Nachschlagetabelle entsprechend den anderen dargestellten Ausführungsbeispielen gestaltet sein kann. Bei Adressierung durch einen der Seillänge entsprechenden Digitalwert erfolgt die Ausgabe der zugehörigen für die Einstellung der gewünschten Filterfrequenz entsprechenden Steuergröße. Bei einem digitalen Filter sind das die entsprechenden digitalen Steuerbefehle. Bei einem analog ausgeführten Filter mit Varicap-Dioden wird ein Spannungsgenerator durch die entsprechende Steuergröße zur Einstellung der entsprechenden Ausgangsspannung zur Ansteuerung programmiert.

Bei der dargestellten Schaltung handelt es sich um eine digitale Regelung, so dass der Integrator 256 und das Filter 258 ebenfalls digital arbeiten. Das Ausgangssignal des Positionsgebers 248 gibt eine Maß für die auf den Drachen wirkenden Kräfte und deren zeitlichen Verlauf, so dass es für die Auswertung der Drachenaktivität herangezogen werden kann.

Um auch die Auswirkungen der Schiffsbewegungen auf die Seilführung auszugleichen, ist ein Beschleunigungssensor 265 vorgesehen, der in Richtung der Seilrichtung wirksam in der Nähe der Winsch eingebaut ist. Ein nachgeschalteter Integrator 266 wandelt die ermittelten Beschleunigungswerte in entsprechende Wegstreckensignale um, welche ebenfalls in Richtung des Seils wirken. Damit wird die in Seilrichtung wirksame Komponente der Schiffsbewegungen durch ein entsprechendes Auf- und Abwickeln des Seils kompensiert, so dass sich die Schiffsbewegungen nicht auf die Position des Drachens auswirken.

Eine bevorzugt als Scheibenbremse ausgebildete Bremse 261 ist auf der Motorwelle für solche Fälle vorgesehen, wenn beispielsweise bei ruhiger See keine Seilbewegungen erforderlich sind. Sie wird durch einen Differenzierer 262 mit nachgeschaltetem Schmitt-Trigger 263 angesteuert, der nur dann ein Signal abgibt, wenn das Ausgangssignal des Differenzierers 262 einen vorgegebenen Wert überschreitet, d.h. die Ansteuerspannung für den Motor 251 sich ändert. Das Ausgangssignal des Schmitt-Triggers gibt dann über einen Inverter 264 (und einen entsprechenden nicht dargestellten Treiber) die Bremse frei und aktiviert die Energiequelle (Treiber) für den Motor. Andernfalls bleibt die Bremse 261 angezogen und wird deaktiviert. Damit wird auch Leistung für den Antriebsmotor 251 eingespart.

Bei einer nicht dargestellten alternativen Ausführung kann zusätzlich zur ersten, motorseitig wirkenden Scheibenbremse 261 noch eine direkt auf den Spillkopf 249 wirkende Bandbremse vorgesehen werden. Dies ist zum Beispiel mit Blick auf die von manchen Zulassungsbehörden geforderte doppelte Sicherheit vorteilhaft, da selbst bei einem Bruch des Motorgetriebes oder der Welle 244 eine Bremsung des Spillkopfes möglich ist.

Die bisher beschriebenen Baugruppen sorgen dafür, dass das Seil jeweils auf eine vorbestimmte Länge ausgebracht wird und die Winsch als quasi "elastisches Element" wirkt, um einer Seilüberdehnung entgegenzuwirken. Ferner werden Resonanzvorgänge auf dem Seil bedämpft, so dass sich nicht durch sich einstellende Resonanzbedingungen Kraftüberhöhungen einstellen können, die das Seil gefährden.

Eine weitere Maßnahme sorgt jetzt noch dafür, dass der Seegang und die daraus resultierenden Schiffsbewegungen sich nicht - oder nur kontrolliert - auf die Position des Windangriffselements 101 auswirken. Hierzu dient die Baugruppe 231 (vergleiche Fig. 3), welche einen Beschleunigungsaufnehmer 265 aufweist, der in Seilrichtung wirkt. Das Ausgangssignal des Beschleunigungsaufnehmers 265 wird einem Integrator 266 zugeführt, der die Beschleunigungen in eine Wegstrecke in Seilrichtung umsetzt. Über einen nachgeschalteten Dosierer/Inverter gelangt das Signal dann auf einen Summenpunkt 257, um dem Proportionalvergleicher 246 zugeführt zu werden. Durch die Baugruppe 267 wird die Position des Drachens 101 in Bezug auf das Schiff jeweils um die Seegangsbewegungen durch Fieren und Holen des Seils verändert, so dass er in Bezug auf die gemittelte Meeresoberfläche seine Höhe beibehält und von den Schiffsbewegungen unbeeinflusst ist. Dies ist insbesondere Schwachwindbedingungen und herrschendem Schwell günstig, wenn der Flug des Drachens nicht durch zusätzliche Kräfte beeinflusst werden soll.

Nun kann es aber auch erwünscht sein, dass die Schiffsbewegungen durch den Luftwiderstand des Windangriffselements gedämpft werden sollen, während der Drachen stabil fliegt. Hierzu ist das Potentiometer 267 vorgesehen, welches eine Dosierung und Polaritätsumkehr des Ausgangssignals des Integrators 266 ermöglicht. Auf diese Weise ist es möglich, den Anteil, mit dem das integrierte Schiffsbewegungssignal auf die Drachenposition in Seilrichtung wirkt, zu dosieren und auch in seiner Polarität umzukehren, so dass es entweder die Bewegungen des Drachen oder aber die Bewegungen des Schiffes bedämpfen kann.

Die Erfindung ist nicht an die dargestellten Ausführungsbeispiele gebunden. Andere im Bereich der Erfindung liegende Konfigurationen ergeben sich aus Kombinationen von Unteransprüchen, welche sich dem Fachmann aufgrund der vorliegenden Beschreibung erschließen.

## Patentansprüche

1. Positionierungsvorrichtung für ein frei ausfliegendes drachenartiges Windangriffselement (1) mit einem Tragflächenprofil als ausschließlicher, als Hilfs- oder als Not-Antrieb, das über ein Zugseil (1.1) mit einem Wasserfahrzeug verbunden ist,
**dadurch gekennzeichnet,**
**dass** eine Winsch (2) vorgesehen ist, welche Mittel aufweist, die bei Unterschreitung einer vorgegebenen ersten Zugkraft und/oder einem bevorstehenden oder eingetretenem Strömungsabriss ein Einholen und/oder bei Überschreiten einer vorgegebenen zweiten Zugkraft und/oder bei Überschreiten einer vorgegebenen Anströmgeschwindigkeit ein Fieren des Zugseil 1 (1.1) bewirken, und dass das Einholen und Fieren, insbesondere bei erhöhtem Seegang, in der Weise erfolgt, dass unerwünschte Schiffsbewegungen in Seilrichtung durch in Bezug auf die Seilrichtung phasenversetzten Antrieb herabgesetzt werden, um Seegangsbewegungen in Bezug auf das Windangriffselement (1) zu kompensieren bzw. dass bei entsprechender phasenversetzter Ansteuerung die Seegangsbewegungen des Schiffes (4) auf Kosten der Bewegung des Windangriffselements (1) herabgesetzt werden.

2. Positionierungsvorrichtung nach Anspruch 1, **dadurch gekennzeichnet, dass** weitere Mittel vorgesehen sind, welche ein Holen bzw. Fieren erst dann auslösen, wenn das Unterschreiten bzw. Überschreiten oder der Strömungsabriss für eine vorgegebene Zeitdauer - die gegebenenfalls für jede Funktionsrichtung unterschiedlich festgelegt sein kann - andauert.

3. Positionierungsvorrichtung nach Anspruch 1 oder 2, **dadurch gekennzeichnet, dass** die Mittel derart ausgestaltet sind, dass das Ausgangssignal eines Sensors für einen bevorstehenden oder bereits eingetretenen Strömungsabriss einem Wandler zugeführt wird, welcher die Winsch (2) zur Verkürzung des Zugseils (1.1) in der Weise ansteuert, dass die Anströmung des Windangriffselements (1) soweit vergrößert wird, dass der Auftrieb des Windangriffselements (1) ausreichend ist, um dieses mindestens in der Luft zu halten.

4. Positionierungsvorrichtung nach einem der Ansprüche 1 bis 3, **dadurch gekennzeichnet, dass**, die Mittel derart ausgestaltet sind, dass wenn die Anströmung einen vorgegebenen Wert überschreitet, die Länge des Zugseils (1.1) wieder sukzessiv vergrößert wird, bis er im Wesentlichen seine Länge vor der Verkürzung erreicht hat.

5. Positionierungsvorrichtung nach einem der Ansprüche 1 bis 4, **dadurch gekennzeichnet, dass** der Winschantrieb (240) eine vorgegebene Drehmoment-Seillängen-Kennlinie aufweist, die sich mit einer vorgegebenen Verzögerungszeitkonstante stets im Bereich der aktuell ausgebrachten Seillänge ausbildet, so dass Seilstöße abgefedert werden.

6. Positionierungsvorrichtung nach Anspruch 5, **dadurch gekennzeichnet, dass** die Kennlinie eine Kraftbegrenzung unterhalb der Maximalbelastbarkeit des Seils (1.1) einschließt.

7. Positionierungsvorrichtung nach einem der Ansprüche 1 bis 6, **dadurch gekennzeichnet, dass** das Kraft/Längen-Verhalten der Winsch (2) eine Bedämpfung von Resonanzvorgängen auf dem Seil (1.1) in Abhängigkeit von der ausgebrachten Seillänge einschließt.

8. Positionierungsvorrichtung nach einem der Ansprüche 1 bis 7, **dadurch gekennzeichnet, dass** die Winschgeschwindigkeit beim Bergen eine Mindestanströmgeschwindigkeit am Windangriffselement (1) erzeugt, die ausreichend zur Aufrechterhaltung seiner Flugfähigkeit unter Belastung durch das Zugseil (1.1) ist.

9. Positionierungsvorrichtung nach einem der Ansprüche 1 bis 8, **dadurch gekennzeichnet, dass** Mittel vorgesehen sind, um das Windangriffselement (1) einzuholen, wenn die Windgeschwindigkeit geringer ist als zur Aufrechterhaltung seiner Flugfähigkeit unter Belastung durch das Zugseil (1.1) erforderlich ist.

10. Positionierungsvorrichtung nach einem der Ansprüche 1 bis 9, **dadurch gekennzeichnet, dass** Mittel vorgesehen sind, um das Windangriffselement (1) einzuholen, wenn eine Kollision mit einem Gegenstand unter Wasser, im Wasser, an Land oder in der Luft innerhalb eines Zeitraums zu befürchten ist, der kleiner oder gleich der Zeit ist, welche für das Einholen des Windangriffselements (1) bei maximaler Winschgeschwindigkeit mindestens erforderlich ist.

11. Positionierungsvorrichtung nach einem der Ansprüche 1 bis 10, **dadurch gekennzeichnet, dass** Mittel vorgesehen sind, um das Windangriffselement (1) vorausschauend einzuholen, wenn navigatorische Einschränkungen das Führen des Windangriffselements (1) verhindern.

12. Positionierungsvorrichtung nach einem der Ansprüche 1 bis 11, **dadurch gekennzeichnet, dass**, wenn innerhalb eines vorgegebenen Zeitintervalls die Mindestanströmgeschwindigkeit nicht unterschritten wurde oder ein Wettersignal empfangen bzw. ermittelt wird, welches eine erhöhte Windgeschwindigkeit bzw. eine die Fahrt in Kursrichtung begünstigende Windrichtung anzeigt , ein Fieren des Seils (1.1) jeweils um einen vorbestimmten zusätzlichen Längenbetrag ausgelöst wird und diese Länge beibehalten wird, wenn bei der ausgebrachten zusätzlichen Seillänge, der Seilzug nicht abfällt.

13. Positionierungsvorrichtung nach einem der Ansprüche 1 bis 12, **dadurch gekennzeichnet, dass** die Winsch (2) mit einem Druckmedium angetrieben wird.

14. Positionierungsvorrichtung nach einem der Ansprüche 1 bis 12, **dadurch gekennzeichnet, dass** der Winschantrieb (240) als volumenverstellbare Hydraulikpumpe ausgebildet ist.

15. Positionierungsvorrichtung nach einem der Ansprüche 1 bis 14, **dadurch gekennzeichnet, dass** ein Notaggregat vorhanden ist, welches die zum Betrieb der Winsch (2) erforderliche Energie auch bei Ausfall der primären Energiequelle sicherstellt.

16. Wasserfahrzeug nach mit einer Positionierungsvorrichtung nach einem der Ansprüche 1 bis 15, **dadurch gekennzeichnet, dass** zur Energiegewinnung ein durch die Strömung des Wassers außerhalb des Wasserfahrzeugs, insbesondere über eine Schiffsschraube oder Turbine, angetriebener Generator vorgesehen ist, welcher die erzeugte elektrische Energie einem Energiespeicher, insbesondere einem Wasserstoffgenerator mit nachgeordnetem Aufbewahrungsbehältnis zuführt.

## Claims

1. Positioning apparatus for a freely flying kite-like element (1) on which wind acts, having a wing profile as the exclusive propulsion system, as an auxiliary propulsion system or as an emergency propulsion system, which is connected via a hawser (1.1) to a watercraft,
**characterized**
**in that** a winch (2) is provided which has means which result in the hawser (1.1) being pulled in if a first predetermined pulling force is undershot and/or in the event of imminent stalling or if stalling has occurred, and/or in the hawser (1.1) being paid out if a second predetermined pulling force is exceeded and/or a predetermined incident-flow speed is exceeded, in that a pulling-in process and a paying-out process, particularly in a relatively high sea state, are carried out in such a manner that undesirable vessel movements in the cable direction are reduced by a phase-shifted drive with respect to the cable direction, in order to compensate for sea-state movements with respect to the element (1) on which wind acts, or in that, with an appropriate phase-shifted drive, the sea-state movements of the vessel (4) are reduced at the expense of the movement of the element (1) on which wind acts.

2. Positioning apparatus according to Claim 1, **characterized in that** further means are provided which initiate a pulling-in or paying-out process only when the undershooting, overshooting or stall last for a predetermined time period - which may if required be defined differently for each function direction.

3. Positioning apparatus according to Claim 1 or 2, **characterized in that** the means are designed in such a manner that the output signal from a sensor for imminent stalling or for stalling which has already occurred is supplied to a converter which drives the winch (2) in order to shorten the hawser (1.1) in such a manner that the incident flow on the element (1) on which wind acts is increased to such an extent that the lift of the element (1) on which wind acts is sufficient in order to at least keep it in the air.

4. Positioning apparatus according to one of Claims 1 to 3, **characterized in that** the means are designed in such a manner that, when the incident flow exceeds a predetermined value, the length of the hawser (1.1) is increased successively again until it has reached essentially the same length as before it was shortened.

5. Positioning apparatus according to one of Claims 1 to 4, **characterized in that** the winch drive (240) has a predetermined torque/cable-length characteristic which is always formed with a predetermined delay time constant in the region of the currently deployed cable length, so that cable shocks are absorbed.

6. Positioning apparatus according to Claim 5, **characterized in that** the characteristic includes force limiting below the maximum load capacity of the cable (1.1).

7. Positioning apparatus according to one of Claims 1 to 6, **characterized in that** the force/length behavior of the winch (2) includes damping of resonance processes on the cable (1.1) as a function of the deployed cable length.

8. Positioning apparatus according to one of Claims 1 to 7, **characterized in that** the winch speed during stowage produces a minimum incident-flow speed on the element (1) on which wind acts, which is sufficient to maintain its flying capability when loaded by the hawser (1.1).

9. Positioning apparatus according to one of Claims 1 to 8, **characterized in that** means are provided in order to pull in the element (1) on which wind acts when the wind speed is less than is required to maintain its flying capability when loaded by the hawser (1.1).

10. Positioning apparatus according to one of Claims 1 to 9, **characterized in that** means are provided in order to pull in the element (1) on which wind acts when there is a risk of a collision with an object under the water, in the water, on the land or in the air within a time period which is less than or equal to the time which is required for the element (1) on which wind acts to be pulled in, as a minimum, at the maximum winch speed.

11. Positioning apparatus according to one of Claims 1 to 10, **characterized in that** means are provided in order to pull in the element (1) on which wind acts in advance when navigational restrictions prevent the guidance of the element (1) on which wind acts.

12. Positioning apparatus according to one of Claims 1 to 11, **characterized in that** the process of paying out the cable (1.1) by a predetermined additional length amount is in each case initiated when the minimum incident-flow speed has not been undershot within a predetermined time interval, or a weather signal is received or is determined which indicates an increased wind speed or a wind direction which will assist travel in the course direction, and this length is maintained provided that the cable pull does not fall down when the additional cable length is deployed.

13. Positioning apparatus according to one of Claims 1 to 12, **characterized in that** the winch (2) is driven by a pressure medium.

14. Positioning apparatus according to one of Claims 1 to 12, **characterized in that** the winch drive (240) is in the form of a variable-volume hydraulic pump.

15. Positioning apparatus according to one of Claims 1 to 14, **characterized in that** an emergency set is provided which ensures that the power required to operate the winch (2) is available even if the primary energy source fails.

16. Watercraft having a positioning apparatus according to one of Claims 1 to 15, **characterized in that** a generator is provided in order to obtain energy, which is driven by the flow of the water outside the watercraft, in particular via a vessel propeller or turbine, and supplies the electrical energy that is generated to an energy store, in particular to a hydrogen generator with a downstream storage container.

## Revendications

1. Dispositif de positionnement pour un élément exposé au vent (1), à vol libre, du type cerf-volant, comportant un profil en surface portante, constituant un mécanisme de commande exclusif, auxiliaire ou de secours, qui par l'intermédiaire d'un câble de halage (1.1) est relié à un bateau, **caractérisé en ce qu'**un treuil (2) est prévu, qui comprend des moyens qui, en présence d'une valeur inférieure à une première force de traction prédéfinie et/ou à un décollement des filets d'air imminent ou se produisant, déclenchent une reprise et/ou, en présence d'une valeur supérieure à une deuxième force de traction prédéfinie et/ou en présence d'une valeur supérieure à une vitesse de soufflage prédéfinie, déclenchent un largage du câble de traction (1.1), et que la reprise et le largage, en particulier en présence d'une forte levée, s'effectue de telle manière que des mouvements indésirables du bateau soient, dans la direction du câble, réduits sous l'effet du mécanisme d'entraînement dont la phase est décalée par rapport à la direction du câble, pour compenser les mouvements de levée par rapport à l'élément exposé au vent (1), ou que, pour une commande correspondante à décalage de phase, les mouvements de levée du bateau (4) soient réduits aux dépens du mouvement de l'élément exposé au vent (1).

2. Dispositif de positionnement selon la revendication 1, **caractérisé en ce qu'**il est prévu des moyens supplémentaires, qui ne déclenchent une reprise ou un largage que lorsque la valeur inférieure ou la valeur supérieure, ou le décollement des filets d'air, persiste pendant une durée prédéfinie - qui éventuellement peut être définie différemment pour chaque direction fonctionnelle.

3. Dispositif de positionnement selon la revendication 1 ou 2, **caractérisé en ce que** les moyens sont configurés de telle sorte que le signal de sortie d'un capteur, pour un décollement des filets d'air imminent ou se produisant déjà, soit envoyé à un convertisseur, qui pilote le treuil (2) pour raccourcir le câble de halage (1.1), de telle sorte que le soufflage de l'élément exposé au vent (1) soit accru jusqu'à ce que la poussée aérostatique de l'élément exposé au vent (1) soit suffisante pour au moins maintenir celui-ci en l'air.

4. Dispositif de positionnement selon l'une des revendications 1 à 3, **caractérisé en ce que** les moyens sont configurés de telle sorte que, lorsque le soufflage est supérieur à une valeur prédéfinie, la longueur du câble de halage (1.1) soit à nouveau augmentée successivement jusqu'à ce qu'il atteigne sensiblement sa longueur avant le raccourcissement.

5. Dispositif de positionnement selon l'une des revendications 1 à 4, **caractérisé en ce que** le mécanisme de commande (240) du treuil possède une courbe caractéristique couple de rotation/longueur du câble, qui, avec une constante de temps de ralentissement prédéfinie, se forme toujours dans la zone de la longueur de câble déployée effectivement, de manière à amortir les chocs dus au câble.

6. Dispositif de positionnement selon la revendication 5, **caractérisé en ce que** la courbe caractéristique comprend une limitation de la force en-dessous de la capacité de sollicitation maximale du câble (1.1).

7. Dispositif de positionnement selon l'une des revendications 1 à 6, **caractérisé en ce que** le comportement force/longueur du treuil (2) inclut une atténuation des processus de résonance agissant sur le câble (1.1), en fonction de la longueur de câble déployée.

8. Dispositif de positionnement selon l'une des revendications 1 à 7, **caractérisé en ce que** la vitesse du treuil, lors du sauvetage, génère une vitesse de soufflage minimale sur l'élément exposé au vent (1), qui est suffisante pour maintenir sa tenue en vol sous une charge générée par le câble de traction (1.1).

9. Dispositif de positionnement selon l'une des revendications 1 à 8, **caractérisé en ce que** des moyens sont prévus pour la reprise de l'élément exposé au vent (1), lorsque la vitesse du vent est inférieure à celle qui est nécessaire pour maintenir sa tenue en vol sous la charge générée par le câble de traction (1.1).

10. Dispositif de positionnement selon l'une des revendications 1 à 9, **caractérisé en ce que** des moyens sont prévus pour la reprise de l'élément exposé au vent (1), lorsqu'il existe un risque de collision avec un objet sous l'eau, dans l'eau, sur terre ou dans l'air, à l'intérieur d'un intervalle de temps qui est inférieur ou égal au temps au moins nécessaire pour la reprise de l'élément exposé au vent (1) en présence de la vitesse maximale du treuil.

11. Dispositif de positionnement selon l'une des revendications 1 à 10, **caractérisé en ce que** des moyens sont prévus, pour la reprise prévisionnelle de l'élément exposé au vent (1), quand des restrictions de navigation empêchent le guidage de l'élément exposé au vent (1).

12. Dispositif de positionnement selon l'une des revendications 1 à 11, **caractérisé en ce que**, quand à l'intérieur d'un intervalle de temps prédéfini la vitesse de soufflage n'est pas passée en-dessous d'une valeur minimale de la vitesse de soufflage, ou un signal météorologique est reçu ou déterminé, qui signale une vitesse du vent plus élevée ou une direction du vent favorisant la marche dans la direction du cap fixé, un largage du câble (1.1) est déclenché sur une longueur supplémentaire prédéfinie, et cette longueur est maintenue si la traction du câble ne se relâche pas quand se déploie la longueur de câble supplémentaire.

13. Dispositif de positionnement selon l'une des revendications 1 à 12, **caractérisé en ce que** le treuil (2) est entraîné par un fluide sous pression.

14. Dispositif de positionnement selon l'une des revendications 1 à 12, **caractérisé en ce que** le mécanisme d'entraînement (240) du treuil est configuré sous forme d'une pompe hydraulique à cylindrée variable.

15. Dispositif de positionnement selon l'une des revendications 1 à 14, **caractérisé par** la présence d'un groupe de secours, lequel garantit l'énergie nécessaire au fonctionnement du treuil (2), même en cas de panne de la source d'énergie primaire.

16. Bateau comportant un dispositif de positionnement selon l'une des revendications 1 à 15, **caractérisé en ce que**, pour la production de l'énergie, il est prévu un générateur qui est entraîné par la circulation de l'eau à l'extérieur du bateau, en particulier par l'intermédiaire d'une hélice de propulsion ou d'une turbine, et qui amène l'énergie électrique produite vers un accumulateur d'énergie, en particulier un générateur à hydrogène comportant un réservoir de stockage monté en aval.
